# EUROPEAN PATENT APPLICATION

(11) **EP 3 738 783 A1**
(43) Date of publication of application: **18.11.2020**
(21) Application number: 20155821.0
(22) Date of filing: 06.02.2020
(51) Int. Cl.: B41N 7/06, C08K 5/00, C08K 5/01, C10M 101/02

(54) **MACHINE AND OIL PRODUCT**

(30) Priority: 15.05.2019 JP 2019091788
(71) Applicant: Mitsubishi Heavy Industries, Ltd., Tokyo 100-8332 (JP)
(72) Inventor: Aoki, Shoichi, Tokyo, 100-8332 (JP); Horaguchi, Norihisa, Tokyo, 100-8332 (JP)
(74) Representative: Hoffmann Eitle

(57) **Abstract**

A machine according to at least one embodiment of the present invention comprises a rubber material to be supplied with an oil product containing a softener, wherein an absolute difference between a solubility parameter of the softener and a solubility parameter of the rubber material is 1.7 or less. The machine having a communication portion connecting the rubber material and an outside of the machine, and is configured to supply the oil product from a first end of the communication portion to a second end of the communication portion.

## Description

### TECHNICAL FIELD

The present disclosure relates to a machine and an oil product.

### BACKGROUND

Rubber material is used in various machines for sealing and other applications. Such rubber material achieves a sealing function through deformation, for instance, upon contact with a metal surface to eliminate a gap from the metal surface.

However, in such rubber material, the sealing function is reduced as the rubber material is aged and cured. The cured rubber material may be replaced with new rubber material by disassembling the machine. However, if the rubber material is in a portion difficult to disassemble, replacement of the rubber material takes a long time, and the machine cannot be used during replacement.

For example, Patent Document 1 discloses that a rubber roller of a printing machine to be reclaimed is kneaded under mechanical pressure while supplying a rubber roller reclaiming agent to the surface of the rubber roller to reduce the hardness of rubber of the rubber roller (see Patent Document 1).

### Citation List

### Patent Literature

Patent Document 1: JP2017-74682A

### SUMMARY

For example, the rubber roller reclaiming agent disclosed in Patent Document 1 cannot be used without stopping the printing machine. Further, the rubber roller reclaiming agent disclosed in Patent Document 1 interrupts the use of the printing machine until the rubber roller reclaiming agent supplied to the rubber roller is removed because the reclaiming agent is used for the rubber roller that touches ink.

In view of the above, an object of at least one embodiment of the present invention is to suppress the curing of a rubber material while using a machine.
(1) A machine according to at least one embodiment of the present invention comprises a rubber material to be supplied with an oil product containing a softener, wherein an absolute difference between a solubility parameter of the softener and a solubility parameter of the rubber material is 1.7 or less. The machine has a communication portion connecting the rubber material and an outside of the machine, and is configured to supply the oil product from a first end of the communication portion to a second end of the communication portion.
   With the above configuration (1), since the oil product containing the softener is supplied to the rubber material from the outside of the machine through the communication portion, it is possible to reduce the hardness of the rubber material or to suppress the curing of the rubber material while using the machine.
(2) In some embodiments, in the above configuration (1), the machine is configured to operate so as to change a region of the rubber material facing the second end of the communication portion while the oil product is supplied through the communication portion.
   With the above configuration (2), since the oil product containing the softener can be supplied to a wide region of the rubber material, it is possible to reduce the hardness of the rubber material or to suppress the curing of the rubber material in a wide region of the rubber material.
(3) In some embodiments, in the above configuration (2), the machine comprises a plurality of rubber rollers in contact with each other, and the oil product is supplied to a contact portion between the rubber rollers from the second end of the communication portion.
   With the above configuration (3), since the oil product containing the softener is supplied to the rubber rollers in contact with each other, it is possible to reduce the hardness of the rubber material or to suppress the curing of the rubber material in a wide region of the rubber rollers in contact with each other.
(4) In some embodiments, in any one of the above configurations (1) to (3), the communication portion is formed prior to supplying the oil product through the communication portion, and the first end of the communication portion is covered after completion of supply of the oil product.
   With the above configuration (4), since the communication portion is formed prior to supplying the oil product containing the softener, the oil product containing the softener can be supplied to the rubber material through the communication portion. Further, with the above configuration (4), since the first end of the communication portion is covered after completion of supply of the oil product containing the softener, it is possible to prevent the oil product containing the softener from flowing out from the end. Thus, it is possible to suppress an unintended reduction in contact time between the softener and the rubber material due to outflow of the oil product containing the softener from the end.
(5) In some embodiments, in any one of the above configurations (1) to (4), the first end of the communication portion is connected to a supply device storing the oil product via a channel, and the oil product is introduced to the rubber material via the channel and the communication portion.
   With the above configuration (5), it is possible to stably introduce the oil product containing the softener to the rubber material.
(6) A machine according to at least one embodiment of the present invention comprises a rubber material, and the machine has a filled portion filled with an oil product containing a softener so that the oil product is in contact with the rubber material, wherein an absolute difference between a solubility parameter of the softener and a solubility parameter of the rubber material is 1.7 or less.
   With the above configuration (6), it is possible to stably bring the oil product containing the softener into contact with the rubber material.
(7) An oil product according to at least one embodiment of the present invention is to be supplied to a rubber material used for lubrication, cooling, power transmission, or sealing of the machine in any one of the above configurations (1) to (5).
   By using the oil product with the above configuration (7), it is possible to reduce the hardness of the rubber material or to suppress the curing of the rubber material used for lubrication, cooling, power transmission, or sealing of the machine.
(8) In some embodiments, in the above configuration (7), the oil product is grease containing a base oil and the softener.
   With the above configuration (8), in a machine using grease, it is possible to reduce the hardness of the rubber material or to suppress the curing of the rubber material.
(9) In some embodiments, in the above configuration (7), the oil product is any of fuel, lubricant oil, a cutting oil agent, refrigeration oil used in a chiller, a pressure transmitting medium, or a heat transfer medium containing a base oil and the softener.

With the above configuration (9), in a machine using any of fuel, lubricant oil, a cutting oil agent, refrigeration oil used in a chiller, a pressure transmitting medium, or a heat transfer medium, it is possible to reduce the hardness of the rubber material or to suppress the curing of the rubber material.

According to at least one embodiment of the present invention, it is possible to suppress the curing of a rubber material while using a machine.

### BRIEF DESCRIPTION OF DRAWINGS

FIG. 1 is an overall system diagram of a turbo chiller as an example of a machine to which the rubber material recovering method according to some embodiments is applicable.
FIG. 2 is a diagram showing an example of the structure of a union joint.
FIG. 3 is a perspective view of a telescopic cover used for a machine tool, etc., as an example of a machine to which the rubber material recovering method according to some embodiments is applicable.
FIG. 4 is a schematic cross-sectional view of a part of a hydraulic machine as an example of a machine to which the rubber material recovering method according to some embodiments is applicable.
FIG. 5 is a graph showing the change in hardness of samples when cured chloroprene rubber samples are immersed in an oil product containing a softener for examining the effect of the softener.
FIG. 6 is a graph showing the change in hardness of samples when cured nitrile rubber samples are immersed in an oil product containing a softener for examining the effect of the softener.
FIG 7 is a table showing results of the examination test according to the graphs shown in FIGs. 5 and 6.
FIG. 8A is a bar graph showing the results of the examination test shown in the table of FIG. 7.
FIG. 8B is a bar graph showing the results of the examination test shown in the table of FIG. 7.
FIG. 8C is a bar graph showing the results of the examination test shown in the table of FIG. 7.
FIG. 9 is a table showing results of a test comparing immersion times of 24 and 183 hours.
FIG. 10A is a bar graph showing the results of the test shown in the table of FIG. 9.
FIG. 10B is a bar graph showing the results of the test shown in the table of FIG. 9.
FIG. 10C is a bar graph showing the results of the test shown in the table of FIG. 9.
FIG. 11 is a diagram showing ranges of addition amount of a softener and SP value of the softener suitable for recovering the hardness of a cured rubber material and suppressing the aging and curing of the rubber material made of chloroprene rubber (CR).
FIG. 12 is a diagram showing ranges of addition amount of a softener and SP value of the softener suitable for recovering the hardness of a cured rubber material and suppressing the aging and curing of the rubber material made of nitrile rubber (NBR).
FIG. 13 is a diagram showing ranges of addition amount of a softener and SP value of the softener suitable for recovering the hardness of a cured rubber material made of fluororubber (FKM).
FIG. 14 is a diagram for describing an example of supply of an oil product containing a softener to a rubber material.
FIG. 15 is a diagram for describing an example of supply of an oil product containing a softener to a rubber material.
FIG. 16 is a simplified overall configuration diagram of a machine tool as an example of a machine including a supply unit for supplying an oil product containing a softener to a rubber material.
FIG. 17 is a simplified overall configuration diagram of a spraying device as an example of a machine including a supply unit for supplying an oil product.
FIG. 18 is a simplified overall configuration diagram of a machine including a supply unit for supplying an oil product containing a softener.
FIG. 19 is a flowchart showing the process of the method for recovering a rubber material according to some embodiments.
FIG. 20 is a flowchart showing the process of the method for recovering a rubber material according to some embodiments.
FIG. 21 is a graph showing the temporal change in hardness of a rubber material as usual, and the temporal change in hardness of a rubber material when the present invention is applied.
FIG. 22 is a graph showing the temporal change in hardness of a rubber material as usual, and the temporal change in hardness of a rubber material when the present invention is applied.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

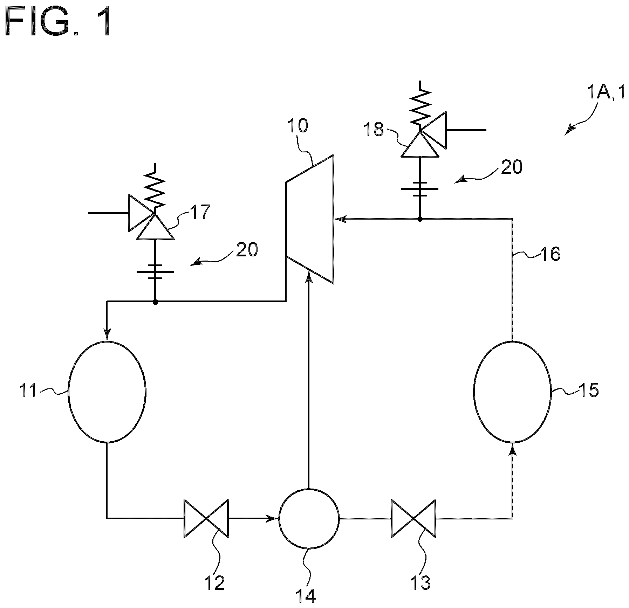

FIG. 1 is an overall system diagram of a turbo chiller as an example of a machine to which the rubber material recovering method according to some embodiments is applicable.

The turbo chiller 1A is a refrigeration device using a turbo compressor such as a centrifugal compressor, which is widely used for large-scale factory air conditioning, district heating and cooling, and other applications.

The turbo chiller 1A includes a centrifugal compressor 10 for compressing a refrigerant, a condenser 11 for cooling the compressed refrigerant, a first expansion valve (pressure reducer) 12 for reducing the pressure of the refrigerant from the condenser 11, an economizer (gas-liquid separator) 14 for separating the refrigerant from the first expansion valve 12 into a gas phase and a liquid phase, a second expansion valve (pressure reducer) 13 for reducing the pressure of the liquid phase from the economizer 14, and an evaporator 15 for evaporating the refrigerant from the second expansion valve 13. In the turbo chiller 1A shown in FIG. 1, a condenser safety valve 17 and an evaporator safety valve 18 are connected to a refrigerant circuit pipe 16 via union joints 20, for example. The turbo chiller 1A is filled with refrigeration oil circulating inside the turbo chiller 1A together with the refrigerant.

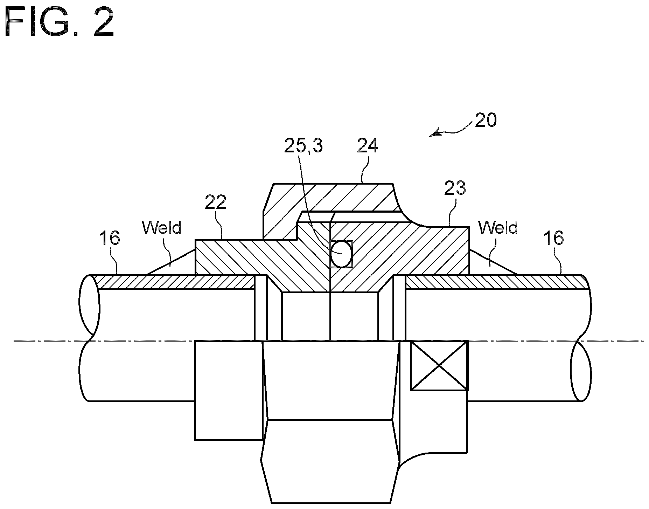

FIG. 2 is a diagram showing an example of the structure of the union joint 20. The union joint 20 includes, for example, a union flange 22 attached to one refrigerant circuit pipe 16, a union screw 23 attached to another refrigerant circuit pipe 16, and a union nut 24 connecting the union flange 22 and the union screw 23. The contact portion between the union flange 22 and the union screw 23 is fitted with an O-ring 25 to prevent leakage of the internal fluid. The one refrigerant circuit pipe 16 and the union flange 22 may be connected by welding, and the other refrigerant circuit pipe 16 and the union screw 23 may be connected by welding, for instance.

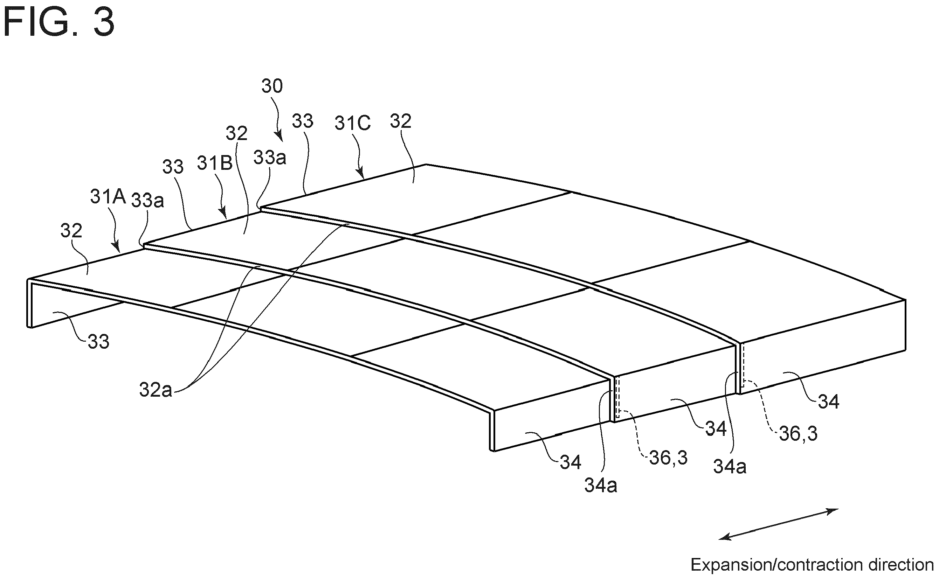

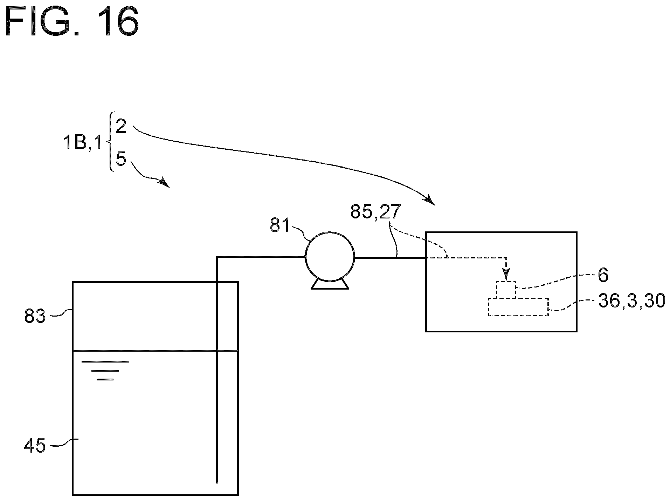

FIG. 3 is a perspective view of a telescopic cover used for a machine tool, etc., as an example of a machine to which the rubber material recovering method according to some embodiments is applicable. The telescopic cover 30 shown in FIG. 3 serves to protect a sliding part (not shown) expandable with movement of a table (not shown) of a machine tool 1B (see FIG. 16), which will be described later, from cutting and dust. As shown in FIG. 3, the telescopic cover 30 has a plurality of cover segments, three cover segments 31A, 31B, 31C in the figure. These cover segments 31A, 31B, 31C are stacked so as to be movable relative to each other in the expansion and contraction direction in FIG. 3.

Each cover segment 31A, 31B, 31C includes an upper plate 32, and side plates 33, 34 respectively connected to both sides of the upper plate 32 and extending downward. For instance, inner ends 32a, 33a, 34a of the upper plates 32 and the side plates 33, 34 of the cover segments 31B, 31C are fitted with wipers 36, which are seal members. The wiper 36 is shaped to contact outer surfaces of the upper plate 32 and the side plates 33, 34 of the cover segment positioned inside the cover segment fitted with the wiper 36. The wiper 36 is made of rubber, for example. The provision of the wiper 36 prevents the ingress of water, oil, or other substances adhering to the surface into the cover segments.

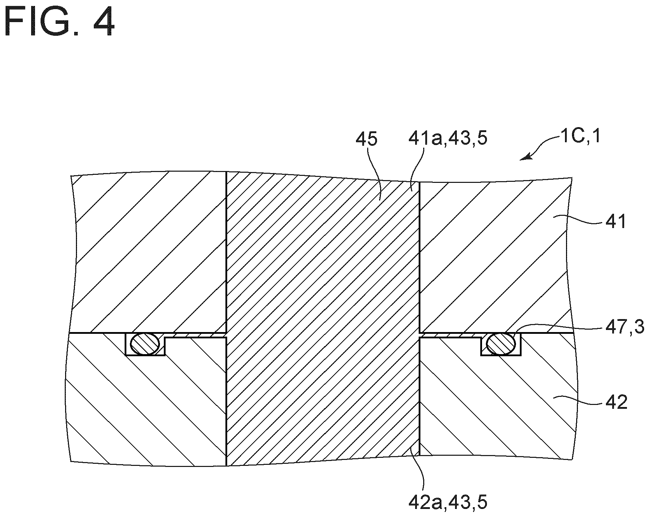

FIG. 4 is a schematic cross-sectional view of a part of a hydraulic machine as an example of a machine to which the rubber material recovering method according to some embodiments is applicable. The hydraulic machine 1C shown in FIG. 4 may be any hydraulic machinery holding a working fluid therein, for example, a hydraulic actuator such as a hydraulic cylinder, or a hydraulic pump.

The hydraulic machine 1C shown in FIG. 4 has an O-ring 47 provided in a junction between a first housing 41 and a second housing 42, for example. An oil holding portion 41a inside the first housing 41 and an oil holding portion 42a inside the second housing 42 are filled with an oil product 45 such as hydraulic oil, fuel, lubricant, grease, or cooling oil. The hydraulic machine 1C shown in FIG. 4 may be a pipe or a manifold filled with the oil product 45.

Generally, the oil products 45 as described above contain a base oil and various additives. Examples of the base oil include mineral oil, synthetic oil, vegetable oil, animal oil. The synthetic oil includes hydrocarbon-based oils (poly-α-olefin, polybutene, synthetic naphthene, etc.) and ester-based oils (aliphatic diester, aromatic ester, etc.). Examples of the additive include oiliness improvers (fatty acid, alcohol, amine ester, etc.), extreme pressure agents (sulfur-based agent, phosphorus-based agent, etc.), detergent dispersants, antioxidants, corrosion inhibitors, viscosity index improvers, defoaming agents, and thickening agents.

As described above, the rubber material 3 such as the O-ring 25, 47 and the wiper 36 is used for sealing or other applications in various machines 1 (1A to 1C). Such rubber material 3 achieves a sealing function through deformation, for instance, upon contact with a metal surface to eliminate a gap from the metal surface.

However, in such rubber material 3, the sealing function is reduced as the rubber material 3 is aged and cured. The cured rubber material 3 may be replaced with new rubber material by disassembling the machine 1. However, if the rubber material 3 is in a portion difficult to disassemble, replacement of the rubber material 3 takes a long time, and the machine 1 cannot be used during replacement. Even if the rubber material 3 is in a portion easy to disassemble and assemble, when the machine 1, such as the turbo chiller 1A, is filled with a working medium, it may be necessary to remove the working medium out of the machine during disassembly and return it to the machine after assembly. Therefore, it is desired to reduce the hardness of the rubber material 3 without disassembling and assembling the machine 1, and it is more preferable to reduce the hardness of the rubber material 3 while using the machine 1.

The present inventors have intensively studied and consequently found that, as described later in detail, by adding a softener capable of reducing the hardness of the rubber material 3 to the oil product 45 to be used in the machine 1, it is possible to reduce the hardness of the rubber material 3 or suppress the curing of the rubber material 3.

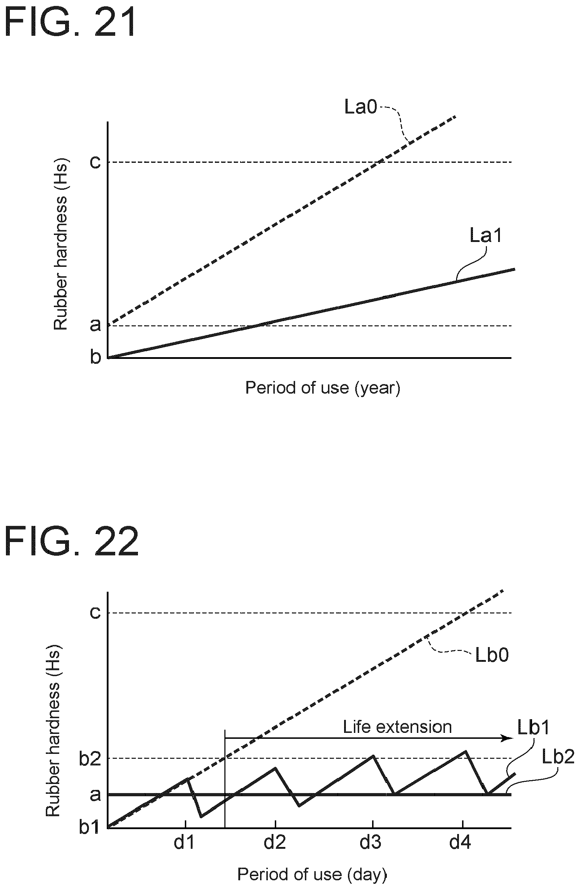

With reference to FIGs. 21 and 22, an overview of the present invention will be described.

FIG. 21 is a graph showing the temporal change in hardness of the rubber material 3 as usual, and the temporal change in hardness of the rubber material 3 when the present invention is applied.

For example, consider the case where the rubber material 3 is used for sealing of the machine 1, and a new oil product cannot be brought into contact with the rubber material 3 unless the machine 1 is stopped and at least a part of the machine 1 is disassembled. In this case, if an oil product used in assembling the rubber material 3 contains no softener, a plasticizer (softener) in the rubber material 3 assembled to the machine 1 is gradually eliminated from the rubber material 3 over time, which leads to an increase in hardness of the rubber material 3. In other words, for example as shown by the dashed line La0 in FIG. 21, where "a" is the hardness of the rubber material 3 in new condition, the hardness of the rubber material 3 increases over time. Then, when the hardness of the rubber material 3 exceeds the value "c", problems such as leakage begin to occur.

To solve the problems, it is conceivable to previously add the softener to the oil product 45 to be used in assembly. This enables, for example as shown by the solid line La1 in FIG. 21, the hardness of the rubber material 3 to decrease from the value "a" to the value "b" at the start of use of the rubber material 3. The hardness of the rubber material 3 then increases over time, but the curing speed is lower than the case where the softener is not added. Therefore, it is possible to extend the lifetime of the rubber material 3.

FIG. 22 is a graph showing the temporal change in hardness of the rubber material 3 as usual, and the temporal change in hardness of the rubber material 3 when the present invention is applied.

For example, consider the case where the rubber material 3 is used for sealing of the machine 1, and a new oil product can be brought into contact with the rubber material 3 regardless of stopping the machine 1. In this case, by adding the softener to the oil product able to contact the rubber material 3 at the start of use of the machine 1, for example as shown by the dashed line Lb0 and the solid line Lb1 in FIG. 22, the hardness of the rubber material 3 decreases from the value "a" to the value "b1" at the start of use of the rubber material 3. For example as in the case of a machine tool 1B described later, if the oil product 45 (e.g., cutting oil agent used in the machine tool 1B) able to contact the rubber material 3 needs to be replenished in accordance with the use of the machine 1, the hardness of the rubber material 3 increases over time as shown by the dashed line Lb0 unless the softener is added to the oil product 45 to be replenished.

Therefore, by adding the softener again to the oil product 45 able to contact the rubber material 3 at a time point when the period of use of the machine 1 reaches d1, the hardness of the rubber material 3 can be reduced back to the value "b1", as shown by the solid line Lb1. Then, by adding the softener again to the oil product 45 able to contact the rubber material 3 at a time point when the use period reaches d2, d3, d4 ..., the hardness of the rubber material 3 can be controlled between the values "b1" and "b2" as shown by the solid line Lb1. Thus, it is possible to extend the lifetime of the rubber material 3.

Even if the oil product 45 able to contact the rubber material 3 needs to be replenished in accordance with the use of the machine 1, by controlling the concentration of the softener in the oil product 45 within a certain range, it is possible to keep the hardness of the rubber material 3 at the initial value "a" as shown by the solid line Lb2 in FIG. 22.

In addition, even in the case where the oil product able to contact the rubber material 3 does not need to be frequently replenished since the oil product 45 circulates and is reused, by previously adding the softener to the oil product 45, it is possible to keep the hardness of the rubber material 3 at the initial value "a" as shown by the solid line Lb2 in FIG. 22.

Based on the aforementioned overview of the present invention, the curing of the rubber material 3 due to aging can be suppressed with the oil product 45 containing the softener, as described in the following embodiments.

For example, in the case of the turbo chiller 1A shown in FIG. 1, by adding the softener to refrigeration oil to be used as the oil product 45, it is possible to suppress the curing of the rubber material 3 due to aging, such as the O-ring 25 of the union joint 20, which contacts the refrigeration oil in a circulation circuit of the refrigerant and refrigeration oil. In this case, it is possible to suppress the curing of the rubber material 3 due to aging while using the turbo chiller 1A.

For example, in the case of the telescopic cover 30 shown in FIG. 3, by adding the softener to a cutting oil agent to be used as the oil product 45 in the later-described machine tool 1B, it is possible to reduce the hardness of the rubber material 3, such as the wiper 36, which contacts the cutting oil agent, or to suppress the curing of the rubber material 3 due to aging. In this case, it is possible to reduce the hardness of the rubber material 3 or to suppress the curing of the rubber material 3 due to aging while using the machine tool 1B.

For example, in the case of the hydraulic machine 1C shown in FIG. 4, by adding the softener to the oil product 45 filling the machine, it is possible to reduce the hardness of the rubber material 3, such as the O-ring 47, which contacts the oil product 45, or to suppress the curing of the rubber material 3 due to aging. In this case, it is possible to reduce the hardness of the rubber material 3 or to suppress the curing of the rubber material 3 due to aging while using the hydraulic machine 1C.

Further, for example, in the case of the hydraulic machine 1C shown in FIG. 4, by using the oil product 45 containing the softener, e.g., grease or lubricant oil containing the softener as assembly oil for the O-ring 47 when the hydraulic machine 1C is assembled, it is possible to suppress the curing of the rubber material 3 due to aging.

As described above, the oil product 45 according to some embodiments is used for lubrication, cooling, power transmission, or sealing of the machine 1 including the rubber material 3, and contains the base oil and the softener for reducing the hardness of the rubber material 3.

Accordingly, by using the oil product 45 containing the softener, it is possible to reduce the hardness of the rubber material 3 or to suppress the curing of the rubber material 3 while using the machine 1.

In some embodiments, the oil product 45 is grease containing the base oil and the softener.

Thus, in the machine 1 using grease, it is possible to reduce the hardness of the rubber material 3 or to suppress the curing of the rubber material 3 while using the machine 1.

In some embodiments, the oil product 45 is any of fuel, lubricant oil, a cutting oil agent, refrigeration oil used in a chiller, a pressure transmitting medium, or a heat transfer medium containing the base oil and the softener.

Thus, in the machine 1 using any of fuel, lubricant oil, a cutting oil agent, refrigeration oil used in a chiller, a pressure transmitting medium, or a heat transfer medium, it is possible to reduce the hardness of the rubber material or to suppress the curing of the rubber material while using the machine 1.

In some embodiments, the rubber material 3 is a seal member such as the O-ring 25, 47 or the wiper 36.

Therefore, according to some embodiments described above, it is possible to recover a reduced sealing function of the seal member or to suppress the reduction in sealing function of the seal member.

### (SP value of rubber material and SP value of softener)

SP value (Hildeband solubility parameter: δ) is a physical property value defined by the square root of the aggregate energy density and is a value indicating the solubility behavior of a solvent. It is empirically known that the smaller the difference in SP value between two components, the greater the solubility. As for the rubber material 3 and the softener, the smaller the difference between the SP value of the rubber material 3 and the SP value of the softener, the higher the affinity between the rubber material 3 and the softener.

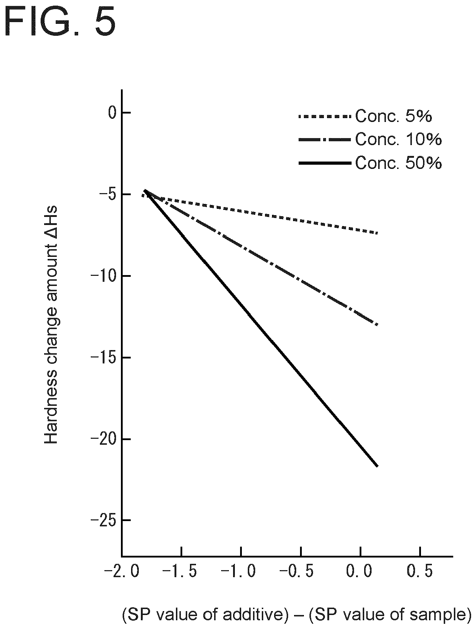

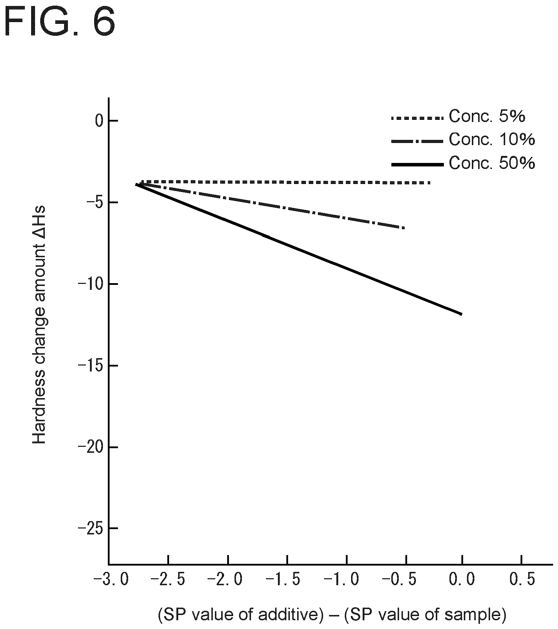

FIG. 5 is a graph showing the change in hardness of samples when cured chloroprene rubber samples are immersed in an oil product containing a softener for examining the effect of the softener. FIG. 6 is a graph showing the change in hardness of samples when cured nitrile rubber samples are immersed in an oil product containing a softener for examining the effect of the softener.

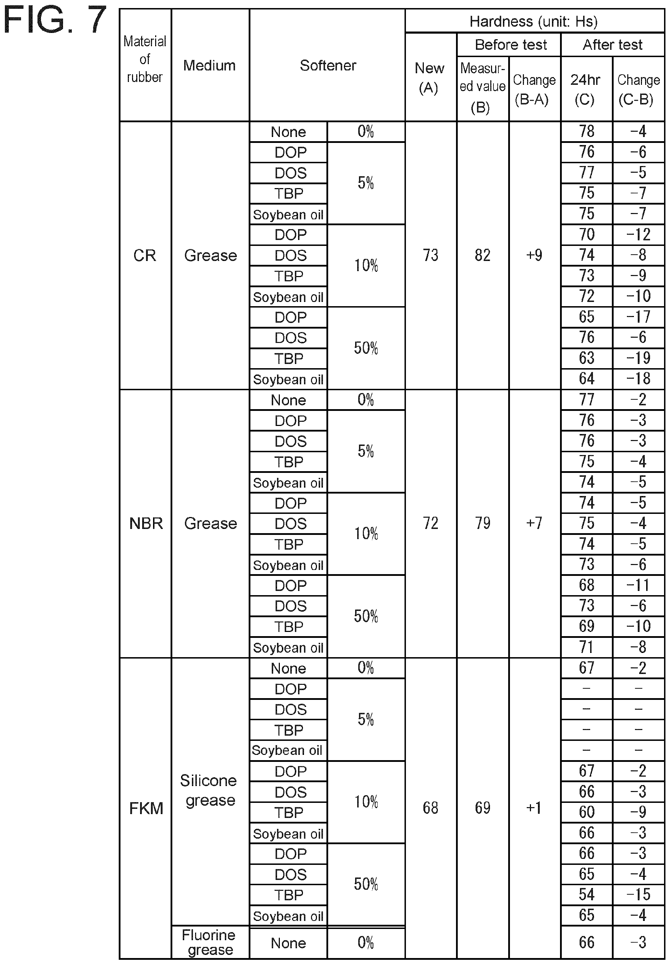

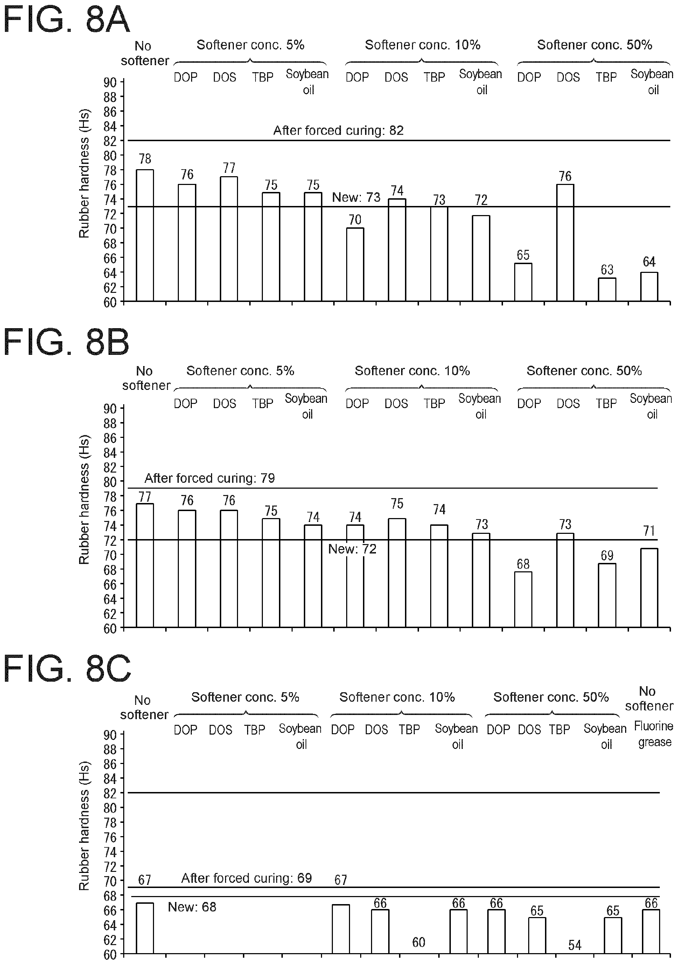

FIG 7 is a table showing results of the examination test according to the graphs shown in FIGs. 5 and 6. FIGs. 8A, 8B, and 8C are bar graphs showing the results of the examination test shown in the table of FIG. 7. FIG 8A is a bar graph showing the results of the examination test on the chloroprene rubber samples in FIG. 7. FIG. 8B is a bar graph showing the results of the examination test on the nitrile rubber samples in FIG. 7. FIG. 8C is a bar graph showing the results of the examination test on the fluororubber samples in FIG. 7.

In this paper, graphs corresponding to FIGs. 5 and 6 regarding the results of the test on the fluororubber samples shown in FIGs. 7 and 8C are omitted.

In the graphs of FIGs. 5 and 6, the horizontal axis represents a value obtained by subtracting the SP value of the rubber sample from the SP value of the additive, and the vertical axis represents hardness change amount HsΔ of the sample measured by the spring hardness test specified by JIS, i.e., the hardness of the sample after the test when the hardness of the sample before the test is zero.

In the test shown in FIG. 5, chloroprene rubber samples previously immersed in a solvent and forcedly cured were used. The samples before the test had a hardness of 73 Hs before the forced curing, and a hardness of 82 Hs after the forced curing.

Similarly, in the test shown in FIG. 6, nitrile rubber samples previously immersed in a solvent and forcedly cured were used. The samples before the test had a hardness of 72 Hs before the forced curing, and a hardness of 79 Hs after the forced curing.

In the tests shown in FIGs. 5, 6 and 7, grease having a SP value of 7.0 was used as the oil product 45 (medium). Further, in the tests shown in FIGs. 5, 6 and 7, aliphatic dibasic acid ester (DOS) having a SP value of 8.4, epoxidized soybean oil having a SP value of 8.0, orthophosphoric acid ester (TBP) having a SP value of 8.6, and phthalic acid ester (DOP) having a SP value of 8.9 were used as the softener. The tests shown in FIGs. 5, 6 and 7 were performed with varying the addition amount of each softener: zero (i.e., the softener is not contained), 5.0 wt%, 10.0 wt%, and 50.0 wt%, based on the weight (100%) of the oil product (grease) containing the softener.

The immersion time was 24 hours in all tests shown in FIGs. 5, 6 and 7.

As a result, as shown in FIGs. 5 and 6, in all tests shown in FIGs. 5 and 6, the smaller the difference between the SP value of the rubber material 3 and the SP value of the softener, the more the hardness of the sample was reduced. In other words, it was revealed that the smaller the difference between the SP value of the rubber material 3 and the SP value of the softener, the greater the effect of reducing the hardness of the rubber material 3, and the greater the effect of suppressing the curing of the rubber material 3 due to aging.

In addition, as shown in FIGs. 5 and 6, in all tests shown in FIGs. 5 and 6, the higher the addition amount (concentration) of the softener, the more the hardness of the sample was reduced. In other words, it was revealed that the higher the addition amount (concentration) of the softener, the greater the effect of reducing the hardness of the rubber material 3, and the greater the effect of suppressing the curing of the rubber material 3 due to aging.

This indicates that the difference in SP value between the rubber material 3 and the softener must be somewhat small in order to achieve the effect of reducing the hardness of the rubber material 3 or suppressing the curing of the rubber material 3 due to aging.

However, when the hardness of the rubber material 3 is reduced more than necessary, the strength required for the rubber material 3 to perform the sealing function cannot be maintained, resulting in a reduction in sealing function. Therefore, there is expected to be an upper limit on the addition amount of the softener.

Moreover, it is also conceivable that the effect of reducing the hardness of the rubber material 3 and the effect of suppressing the curing of the rubber material 3 due to aging vary depending on the period of contact time between the rubber material 3 and the softener.

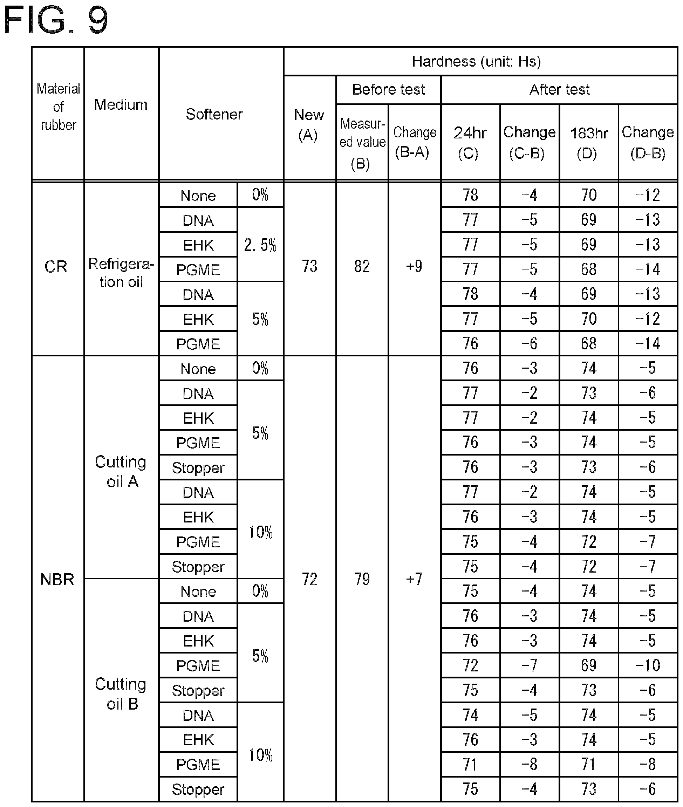

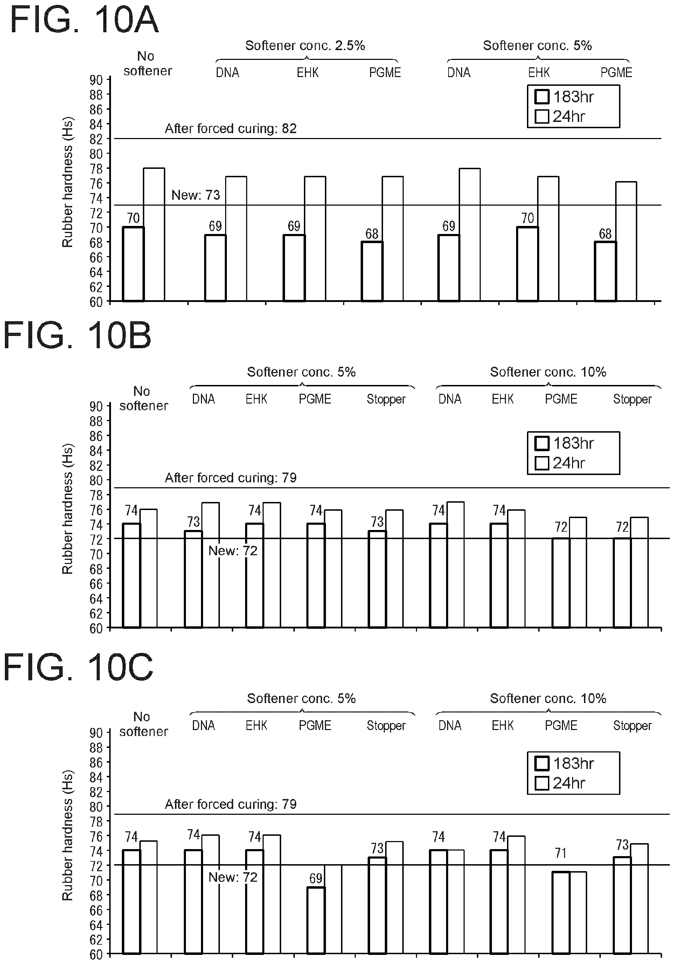

Then, the present inventors have conducted a test to compare contact times (immersion times) of 24 and 183 hours. FIG. 9 is a table showing results of a test comparing immersion times of 24 and 183 hours. FIGs. 10A, 10B, and 10C are bar graphs showing the results of the test shown in the table of FIG. 9. FIG. 10A is a bar graph showing the results of the test on the chloroprene rubber samples in FIG. 9. FIG 10B is a bar graph showing the results of the case where cutting oil A is used as the oil product 45 (medium) in the test on the nitrile rubber samples in FIG. 9. FIG. 10C is a bar graph showing the results of the case where cutting oil B is used as the oil product 45 (medium) in the test on the nitrile rubber samples in FIG. 9.

In the test shown in FIG. 9, chloroprene rubber samples previously immersed in a solvent and forcedly cured were used. The samples before the test had a hardness of 73 Hs before the forced curing, and a hardness of 82 Hs after the forced curing.

Similarly, in the test shown in FIG. 9, nitrile rubber samples previously immersed in a solvent and forcedly cured were used. The samples before the test had a hardness of 72 Hs before the forced curing, and a hardness of 79 Hs after the forced curing.

In the test shown in FIG. 9, as the oil product 45 (medium), refrigeration oil having a SP value of 7.0 was used for the chloroprene rubber samples, and cutting oil A having a SP value of 7.0, and cutting oil B produced by a different manufacturer from the cutting oil A and having a SP value of 7.0 were used for the nitrile rubber samples.

For the chloroprene rubber samples in the test shown in FIG. 9, as the softener, diisononyl adipate diester (DNA), 2-ethylhexyl cocoate monoester (EHK), and propylene glycol monomethyl ether (PGME) were used.

In addition to that, for the nitrile rubber samples in the test shown in FIG. 9, an additive (trade name: EPS Engine Power Shield), manufactured by Wako Chemical Co., Ltd., was also used as the softener. In FIGs. 9, 10B and 10C, this additive is denoted as "stopper". Although the additive manufactured by Wako Chemical Co., Ltd., was used as the softener, another additive of the same type may be used as the softener, which provides the same effect as the additive manufactured by Wako Chemical Co., Ltd.

The test on the chloroprene rubber samples among the tests shown in FIG. 9 was performed with varying the addition amount of the softener: zero (i.e., the softener is not contained), 2.5 wt%, and 5.0 wt%, based on the weight (100%) of the oil product (refrigeration oil) containing the softener.

The test on the nitrile rubber samples among the tests shown in FIG. 9 was performed with varying the addition amount of the softener: zero (i.e., the softener is not contained), 5.0 wt%, and 10.0 wt%, based on the weight (100%) of the oil product (refrigeration oil) containing the softener.

In light of these points, as a result of intensive studies by the present inventors, suitable conditions were determined as follows, with respect to the difference between the SP value of the rubber material 3 and the SP value of the softener, the addition amount of the softener, and the contact time between the rubber material 3 and the softener.

With respect to the difference between the SP value of the rubber material 3 and the SP value of the softener, as described later in detail, it was revealed that the absolute value of the difference between the SP value of the rubber material 3 and the SP value of the softener is preferably 1.7 or less.

With this range, it is possible to effectively reduce the hardness of the rubber material 3 or to effectively suppress the curing of the rubber material 3.

Hereinafter, the difference between the SP value of the rubber material 3 and the SP value of the softener, the addition amount of the softener, and the contact time between the rubber material 3 and the softener will be described in conjunction with a specific material of the rubber material 3.

### (Chloroprene rubber)

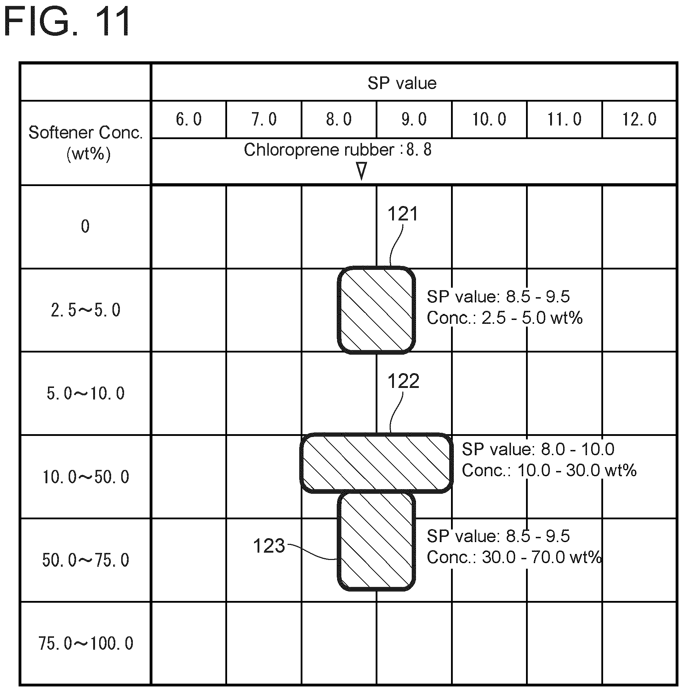

FIG. 11 is a diagram showing ranges of addition amount of the softener and SP value of the softener suitable for recovering the hardness of a cured rubber material 3 and suppressing the aging and curing of the rubber material 3 made of chloroprene rubber (CR).

The SP value of the rubber material 3 made of chloroprene rubber (CR) was 8.8. In this case, by supplying the oil product 45 containing the softener having a SP value of 8.0 or more and 10.0 or less to the rubber material 3, the hardness of the cured rubber material 3 was reduced to the hardness before use, or the aging and curing of the rubber material 3 was suppressed. That is, in this case, the preferable value of the difference between the SP value of the softener and the SP value of the rubber material 3 is -0.8 or more and 1.2 or less.

With this range, it is possible to reduce the hardness of the cured rubber material 3 made of chloroprene rubber to the hardness before use, or to suppress the aging and curing of the rubber material 3.

In the case of the rubber material 3 made of chloroprene rubber (CR), as shown by the range 121 in FIG. 11, the aging and curing of the rubber material 3 was suppressed by supplying the oil product 45 containing 2.5 wt% or more and 5.0 wt% or less of the softener having a SP value of 8.5 or more and 9.5 or less to the rubber material 3.

With this range, it is possible to suppress the curing of the rubber material 3 made of chloroprene rubber over a relatively long period of time.

In the case of the rubber material 3 made of chloroprene rubber (CR), as shown by the range 122 in FIG. 11, the hardness of the rubber material 3 was reduced to the hardness before use by supplying the oil product 45 containing 10.0 wt% or more and 30.0 wt% or less of the softener having a SP value of 8.0 or more and 10.0 or less to the rubber material 3. In addition, in this case, when the contact time between the rubber material 3 and the softener was between 15 hours and 50 hours, i.e., less than one day to about two days, the hardness of the rubber material 3 was not too low or too high.

With this range, it is possible to reduce the hardness of the cured rubber material 3 made of chloroprene rubber to the hardness before use in a relatively short time.

In the case of the rubber material 3 made of chloroprene rubber (CR), as shown by the range 123 in FIG. 11, the hardness of the rubber material 3 was reduced to the hardness before use by supplying the oil product 45 containing 30.0 wt% or more and 70.0 wt% or less of the softener having a SP value of 8.5 or more and 9.5 or less to the rubber material 3. In addition, in this case, when the contact time between the rubber material 3 and the softener was several hours to about 15 hours, the hardness of the rubber material 3 was not too low or too high.

With this range, it is possible to reduce the hardness of the cured rubber material 3 made of chloroprene rubber to the hardness before use in a relatively short time.

### (Nitrile rubber)

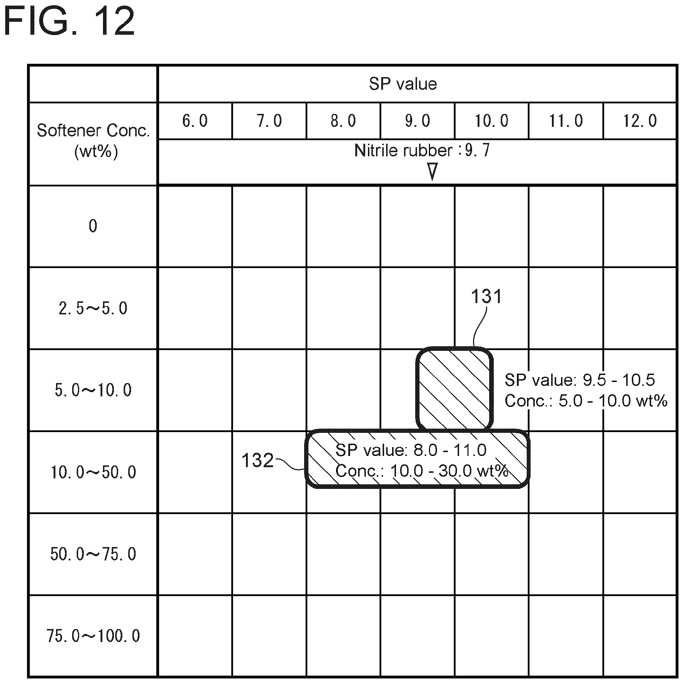

FIG. 12 is a diagram showing ranges of addition amount of the softener and SP value of the softener suitable for recovering the hardness of a cured rubber material 3 and suppressing the aging and curing of the rubber material 3 made of nitrile rubber (NBR).

The SP value of the rubber material 3 made of nitrile rubber (NBR) was 9.7. In this case, by supplying the oil product 45 containing the softener having a SP value of 8.0 or more and 11.0 or less to the rubber material 3, the hardness of the cured rubber material 3 was reduced to the hardness before use, or the aging and curing of the rubber material 3 was suppressed. That is, in this case, the preferable value of the difference between the SP value of the softener and the SP value of the rubber material 3 is -1.7 or more and 1.3 or less.

With this range, it is possible to reduce the hardness of the cured rubber material 3 made of nitrile rubber to the hardness before use, or to suppress the aging and curing of the rubber material 3.

In the case of the rubber material 3 made of nitrile rubber (NBR), as shown by the range 131 in FIG. 12, the aging and curing of the rubber material 3 was suppressed by supplying the oil product 45 containing 5.0 wt% or more and 10.0 wt% or less of the softener having a SP value of 9.5 or more and 10.5 or less to the rubber material 3.

With this range, it is possible to suppress the curing of the rubber material 3 made of nitrile rubber over a relatively long period of time.

In the case of the rubber material 3 made of nitrile rubber (NBR), as shown by the range 132 in FIG. 12, the hardness of the rubber material 3 was reduced to the hardness before use by supplying the oil product 45 containing 10.0 wt% or more and 30.0 wt% or less of the softener having a SP value of 8.0 or more and 11.0 or less to the rubber material 3. In addition, in this case, when the contact time between the rubber material 3 and the softener was between 15 hours and 50 hours, i.e., less than one day to about two days, the hardness of the rubber material 3 was not too low or too high.

With this range, it is possible to reduce the hardness of the cured rubber material 3 made of nitrile rubber to the hardness before use in a relatively short time.

### (Fluororubber)

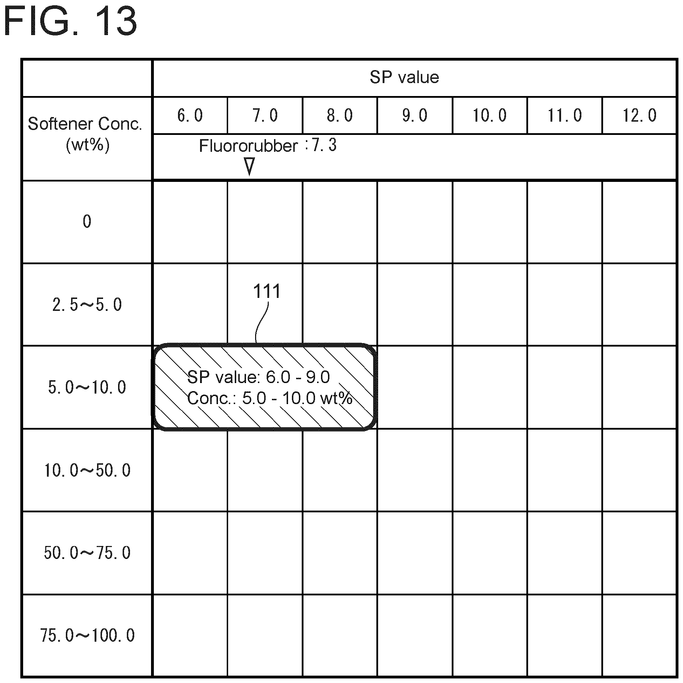

FIG. 13 is a diagram showing ranges of addition amount of the softener and SP value of the softener suitable for recovering the hardness of a cured rubber material 3 made of fluororubber (FKM).

The SP value of the rubber material 3 made of fluororubber (FKM) was 7.3. In this case, by supplying the oil product 45 containing the softener having a SP value of 6.0 or more and 9.0 or less to the rubber material 3, the hardness of the cured rubber material 3 was reduced to the hardness before use. That is, in this case, the preferable value of the difference between the SP value of the softener and the SP value of the rubber material 3 is - 1.3 or more and 1.7 or less.

With this range, it is possible to reduce the hardness of the rubber material 3 made of fluororubber to the hardness before use.

In the case of the rubber material 3 made of fluororubber (FKM), as shown by the range 111 in FIG. 13, the hardness of the rubber material 3 was reduced to the hardness before use by supplying the oil product 45 containing 5.0 wt% or more and 10.0 wt% or less of the softener having a SP value of 6.0 or more and 9.0 or less to the rubber material 3. In addition, in this case, when the contact time between the rubber material 3 and the softener was between 15 hours and 50 hours, i.e., less than one day to about two days, the hardness of the rubber material 3 was not too low or too high.

With this range, it is possible to reduce the hardness of the cured rubber material 3 made of fluororubber to the hardness before use in a relatively short time.

From the above, the absolute difference between the SP value of the rubber material 3 and the SP value of the softener is preferably 1. 7 or less.

In order to facilitate the transfer of the softener to the rubber material, it is desirable to supply the rubber material 3 with the oil product 45 containing the softener having a SP value the absolute difference of which from the SP value of the rubber material 3 is smaller than the absolute difference from the SP value of the oil product 45.

As a result, since the softener easily moves to the rubber material 3, it is possible to effectively reduce the hardness of the rubber material 3 or to effectively suppress the curing of the rubber material 3.

Further, in order to facilitate the transfer of the softener to the rubber material, if the SP value of the oil product 45 is greater than the SP value of the rubber material 3, it is preferable to supply the rubber material 3 with the oil product 45 containing the softener having a SP value less than the SP value of the rubber material 3.

Similarly, in order to facilitate the transfer of the softener to the rubber material, if the SP value of the oil product 45 is less than the SP value of the rubber material 3, it is preferable to supply the rubber material 3 with the oil product 45 containing the softener having a SP value greater than the SP value of the rubber material 3.

As a result, since the softener easily moves to the rubber material 3, it is possible to effectively reduce the hardness of the rubber material 3 or to effectively suppress the curing of the rubber material 3.

### (Method for supplying oil product 45 containing softener)

The oil product 45 containing the softener according to the above embodiments can be supplied to the rubber material 3 in a manner as described below.

For instance, if there is a communication portion allowing access from outside to the rubber material 3 disposed in the machine 1, the oil product 45 containing the softener according to the above embodiments can be supplied to the rubber material 3 through this communication portion.

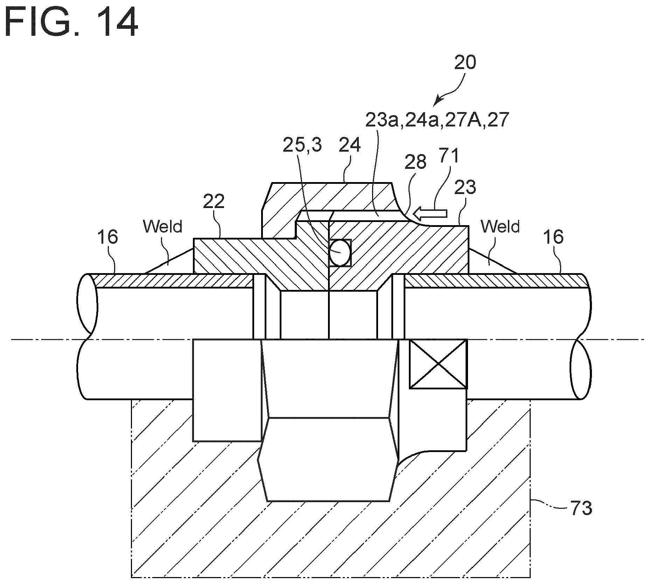

As an example of the case where there is a communication portion allowing access from outside to the rubber material 3 disposed in the machine 1, the union joint 20 shown in FIGs. 2 and 14 may be mentioned. FIG. 14 is a diagram for describing an example of supply of the oil product 45 containing the softener to the rubber material 3, and shows the same union joint 20 as FIG. 2.

For instance, the union joint 20 shown in FIGs. 2 and 14 has a gap in a connection portion between a female thread 24a of the union nut 24 and a male thread 23a of the union screw 23. This gap continues from the outside of the union joint 20 to the O-ring 25. In other words, the gap is a communication portion 27 connecting the outside of the machine 1 and the rubber material 3 (see FIG. 14). For illustrative purposes, the communication portion 27 represented by the gap is labeled with the letter "A" after the reference numeral.

As shown by the arrow 71 in FIG. 14, by supplying the oil product 45 containing the softener to an outer end of the connection portion between the female thread 24a of the union nut 24 and the male thread 23a of the union screw 23, i.e., to an end 28 of the communication portion 27A on the opposite side from the rubber material 3, the oil product 45 containing the softener can reach the O-ring 25 through the gap in the connection portion.

Thus, it is possible to reduce the hardness of the rubber material or to suppress the curing of the rubber material while using the machine.

For instance, if leakage from inside the union joint 20 has not occurred, by supplying the oil product 45 containing the softener meeting a SP value and a concentration in the range 111 in FIG. 13, the range 121, 122 in FIG. 11, or the range 131, 132 in FIG. 12 to the end 28 according to the material of the O-ring 25, it is possible to reduce the hardness of the rubber material or suppress the curing of the rubber material while using the machine.

Further, for instance, even if leakage from inside the union joint 20 has occurred, by supplying the oil product 45 containing the softener meeting a SP value and a concentration in the range 123 in FIG. 11 to the end 28 according to the material of the O-ring 25, it is possible to reduce the hardness of the rubber material in a short time from several hours to about 15 hours and stop the leakage. In this case, in order to facilitate the transfer of the oil product 45 containing the softener to the O-ring 25, a measure to temporarily stop the leakage from inside the union joint 20 is desirably provided. Specifically, it is desirable that the pressure in the union joint 20 is controlled by closing a valve (not shown) disposed in a pipe leading to the union joint 20, or if possible, the pressure in the union joint 20 is controlled by temporarily stopping the use of the machine 1.

After the oil product 45 containing the softener is supplied as shown by the arrow 71 in FIG. 14, a tape-like member such as vinyl tape may be wrapped around the circumference of the union joint 20 to cover the end 28. This prevents the oil product containing the softener from escaping from the end 28 to the outside of the machine 1 (union joint 20). Accordingly, it is possible to suppress an unintended reduction in contact time between the softener and the rubber material 3 due to outflow of the oil product containing the softener to the outside of the machine 1 from the end 28.

The member covering the end 28 may not have a function to hold the oil product, for instance, by impregnation of the member with the oil product containing the softener like the tape-like member, or may have the function to hold the oil product. Examples of the member having the function to hold the oil product include porous and deformable members such as a woven fabric, a nonwoven fabric, and a sponge.

The communication portion 27 connecting the rubber material 3 and the outside of the machine 1 may be formed in the machine 1 including the rubber material 3 so as to allow the rubber material 3 to be supplied with the oil product 45 containing the softener from the outside of the machine 1.

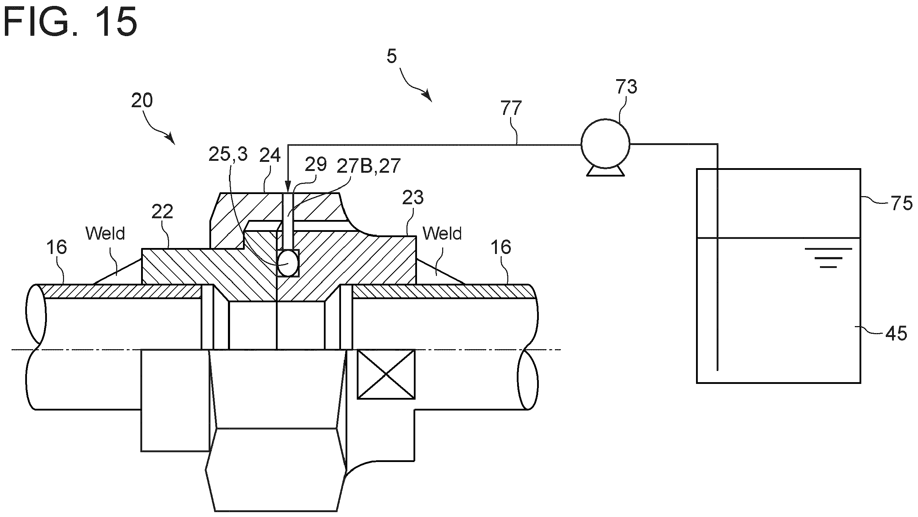

For instance, as shown in FIG. 15, a through hole leading to the O-ring 25 from the outer circumference of the union joint 20 may be formed in the union joint 20 shown in FIGs. 2 and 14, to form the communication portion 27 connecting the rubber material 3 and the outside of the machine 1 (union joint 20). In other words, the communication portion 27 may be the through hole formed in the union joint 20. FIG. 15 is a diagram for describing an example of supply of the oil product 45 containing the softener to the rubber material 3, and shows the case where the through hole is formed in the same union joint 20 as FIGs. 2 and 14. For illustrative purposes, the communication portion 27 represented by the through hole is labeled with the letter "B" after the reference numeral.

As shown in FIG. 15, by forming the through hole in the union joint 20 and supplying the oil product 45 containing the softener to an outer end of the through hole, i.e., to an end 29 of the communication portion 27B on the opposite side from the rubber material 3, the oil product 45 containing the softener can reach the O-ring 25 through the through hole.

Thus, it is possible to reduce the hardness of the rubber material 3 or to suppress the curing of the rubber material 3 while using the machine 1.

After supplying the oil product 45 containing the softener through the communication portion 27B, the end 29 may be covered as with the embodiment shown in FIG. 14.

In addition, in the case where the through hole (communication portion 27B) is formed in the union joint 20 as shown in FIG. 15, a pipe 77 may be connected to the end 29, and the oil product 45 containing the softener may be supplied to the O-ring 25 via the pipe 77 from a tank 75 disposed outside the machine 1 using a pump 73.

In the embodiment shown in FIG. 15, after supplying the oil product 45 containing the softener to the O-ring 25 with the pump 73, the pipe 77 may be removed from the end 29, and the end 29 may be covered as with the embodiment shown in FIG. 14.

With reference to FIG. 16, an example of the machine 1 including a supply unit for supplying the oil product 45 containing the softener to the rubber material 3 will be described. FIG. 16 is a simplified overall configuration diagram of a machine tool 1B as an example of the machine 1 including a supply unit for supplying the oil product 45 containing the softener to the rubber material 3. The machine tool 1B shown in FIG. 16 includes a machining unit 2, a supply unit 5 for supplying cutting oil to the machining unit 2, and the telescopic cover 30 shown in FIG. 3. The machining unit 2 of the machine tool 1B shown in FIG. 16 can machine, e.g., cut, a workpiece 6. The supply unit 5 has a supply device (supply pump) 81 for supplying cutting oil to the machining unit 2, more specifically, to a portion of the workpiece 6 to be machined by the machining unit 2, and a tank 83 of the cutting oil. The supply unit 5 can supply the cutting oil (oil product 45) in the tank 83 to the workpiece 6 via a supply pipe 85 using the supply pump 81.

The oil product 45 supplied to the workpiece 6 from the supply unit 5 also contacts the telescopic cover 30 described above. Further, the oil product 45 contacts the wiper 36 with the relative movement of the cover segments 31A, 31B, 31C of the telescopic cover 30 in the expansion and contraction direction in FIG. 3.

Accordingly, by adding the softener to the oil product 45 in the tank 83, the supply unit 5 supplies the oil product 45 containing the softener to the rubber material 3 (wiper 36). In other words, the supply unit 5 supplies the oil product containing the softener so that the oil product contacts the rubber material 3.

Thus, it is possible to easily reduce the hardness of the rubber material 3 or to suppress the curing of the rubber material 3 in the machine tool 1B shown in FIG. 16.

In the case of reducing the hardness of the wiper 36 in the machine tool 1B shown in FIG. 16, for instance, by using the machine tool 1B for about 15 hours to 50 hours while supplying the wiper 36 with the oil product 45 containing the softener meeting a SP value and a concentration in the range 111 in FIG. 13, the range 122 in FIG. 11, or the range 132 in FIG. 12 according to the material of the wiper 36, it is possible to reduce the hardness of the wiper 36. After reducing the hardness of the wiper 36, the machine tool 1B may be used with the oil product 45 (cutting oil) containing no softener to prevent the hardness of the wiper 36 from being reduced more than necessary.

In the case of suppressing the curing of the wiper 36 due to aging in the machine tool 1B shown in FIG. 16, for instance, by continuously using the machine tool 1B while supplying the wiper 36 with the oil product 45 containing the softener meeting a SP value and a concentration in the range 121 in FIG. 11 or the range 131 in FIG. 12 according to the material of the wiper 36, it is possible to suppress the curing of the wiper 36 due to aging.

More specifically, in the machine tool 1B shown in FIG. 16, the supply unit 5 includes the supply device 81 for supplying the oil product 45 containing the softener and the supply pipe 85 serving as a channel introducing the oil product 45 containing the softener supplied from the supply device 81 to the rubber material 3.

Thereby, it is possible to stably introduce the oil product 45 containing the softener to the rubber material 3.

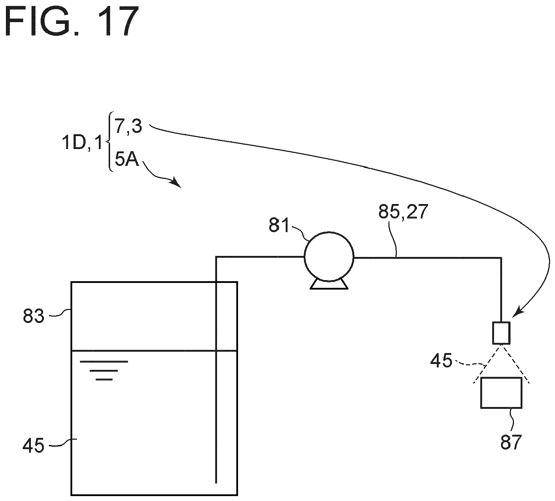

With reference to FIG. 17, another example of the machine 1 including the supply unit for supplying the oil product 45 will be described. FIG. 17 is a simplified overall configuration diagram of a spraying device 1D as an example of the machine 1 including the supply unit for supplying the oil product 45. The spraying device 1D shown in FIG. 17 includes a spray nozzle 7 and a supply unit 5A for supplying the oil product 45 to the spray nozzle 7. The spraying device 1D shown in FIG. 17 can spray the oil product 45 from the spray nozzle 7 to a spray target 87. In the spraying device 1D shown in FIG. 17, the supply unit 5A has a supply device (supply pump) 81 for supplying the oil product 45 to the spray nozzle 7 and a tank 83 for the oil product 45. The supply unit 5A can supply the oil product 45 in the tank 83 to the spray nozzle 7 via a supply pipe 85 using the supply pump 81.

In the spraying device 1D, the rubber material 3 is used for sealing of components such as the spray nozzle 7 and a joint of the supply pipe 85. With use of the spraying device 1D, a plasticizer contained in the rubber material 3 may elute into the oil product 45, resulting in the curing of the rubber material 3.

In such a spraying device 1D, by adding the softener to the oil product 45 to be sprayed, the oil product 45 with the softener can contact the rubber material 3 used in the joint of the supply pipe 85, the spray nozzle 7, etc. Thus, it is possible to easily reduce the hardness of the rubber material 3 or to suppress the curing of the rubber material 3 in the spraying device 1D shown in FIG. 17.

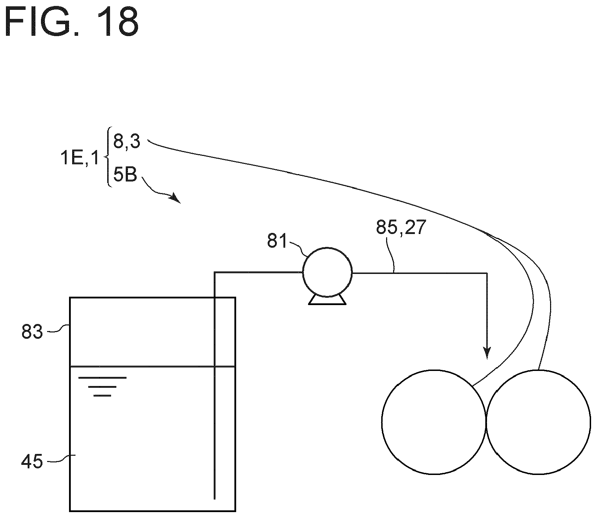

With reference to FIG. 18, another example of the machine 1 including the supply unit for supplying the oil product 45 containing the softener will be described. FIG. 18 is a simplified overall configuration diagram of a machine 1E including the supply unit for supplying the oil product 45 containing the softener. The machine 1E shown in FIG. 18 includes a plurality of rubber rollers 8 in contact with each other and a supply unit 5B for supplying the oil product 45 to the rubber rollers 8. The machine 1E shown in FIG. 18 may be a printing machine. When the machine 1E shown in FIG. 18 is a printing machine, the oil product 45 used in this machine 1E may be printing ink, for example. Although FIG. 18 depicts two rubber rollers 8 in contact with each other, the number of the rubber rollers 8 in contact with each other may be three or more.

The supply unit 5B has a supply device (supply pump) 81 for supplying the oil product 45 to the rubber rollers 8 in contact with each other and a tank 83 for the oil product 45. The supply unit 5B can supply the oil product 45 in the tank 83 to the contact portion between the rubber rollers 8 via a supply pipe 85 using the supply pump 81.

In the machine IE, a plasticizer contained in the rubber material 3 of the rubber rollers 8 may elute into the oil product 45, resulting in the curing of the rubber material 3.

In such a machine IE, by adding the softener to the oil product 45, the oil product 45 with the softener can contact the rubber material 3 of the rubber rollers 8. Specifically, in the machine 1E shown in FIG. 18, by supplying the oil product 45 containing the softener to the surfaces of the rubber rollers 8 with the supply device 81 while rotating the rubber rollers 8, the oil product 45 containing the softener can contact and permeate into the entire rubber material 3 covering the outer periphery of the rubber rollers 8.

Thus, it is possible to easily reduce the hardness of the rubber material 3 or to suppress the curing of the rubber material 3 in the machine 1E shown in FIG. 18.

In the machine 1E shown in FIG. 18, the oil product 45 may be supplied to the rubber rollers 8 using the spray nozzle 7 shown in FIG. 17.

In the hydraulic machine 1C shown in FIG. 4, as described above, the interior of the hydraulic machine 1C, i.e. the oil holding portions 41a, 42a are filled with the oil product 45. That is, the oil holding portions 41a, 42a of the hydraulic machine 1C shown in FIG. 4 are a filled portion 43 filled with the oil product 45. In the hydraulic machine 1C shown in FIG. 4, by adding the softener to the oil product 45 to be supplied into the hydraulic machine 1C, the softener can be supplied to the O-ring 47 of the rubber material 3. Accordingly, in the hydraulic machine 1C shown in FIG. 4, the supply unit 5 for supplying the oil product 45 containing the softener to the rubber material 3 includes the filled portion 43 filled with the oil product 45 containing the softener so that the oil product containing the softener contacts the rubber material 3.

Thus, the hydraulic machine 1C shown in FIG. 4 allows the oil product 45 containing the softener to stably contact the rubber material 3.

Regardless of the amount of the oil product 45 held in the hydraulic machine 1C, the oil product 45 may or may not flow inside the hydraulic machine 1C.

In the case of reducing the hardness of the O-ring 47 in the hydraulic machine 1C shown in FIG. 4, for instance, by filling the interior of the hydraulic machine 1C only for a period about 15 hours to 50 hours with the oil product 45 containing the softener meeting a SP value and a concentration in the range 111 in FIG. 13, the range 122 in FIG. 11, or the range 132 in FIG. 12 according to the material of the O-ring 47, it is possible to reduce the hardness of the O-ring 47. After reducing the hardness of the O-ring 47, the interior of the hydraulic machine 1C may be filled with the oil product 45 containing no softener to prevent the hardness of the O-ring 47 from being reduced more than necessary.

In the case of suppressing the curing of the O-ring 47 due to aging in the hydraulic machine 1C shown in FIG. 4, for instance, by filling the interior of the hydraulic machine 1C with the oil product 45 containing the softener meeting a SP value and a concentration in the range 121 in FIG. 11 or the range 131 in FIG. 12 according to the material of the O-ring 47, it is possible to suppress the curing of the O-ring 47 due to aging.

In the above embodiments, each machine 1 has the communication portion 27 connecting the outside of the machine 1 and the rubber material 3.

More specifically, for example, in the embodiment shown in FIG. 14, the gap in the connection portion between the female thread 24a of the union nut 24 and the male thread 23 a of the union screw 23 is the communication portion 27A.

For example, in the embodiment shown in FIG. 15, the through hole formed in the union joint 20 is the communication portion 27B.

For example, in the embodiments shown in FIGs. 16, 17, and 18, the supply pipe 85 is the communication portion 27.

In the embodiments shown in FIGs. 14 to 18, the machine 1 is configured to able to supply the oil product 45 containing the softener to the rubber material 3 by supplying the oil product 45 from a first end of the communication portion 27 to a second end of the communication portion 27.

Thus, it is possible to reduce the hardness of the rubber material 3 or to suppress the curing of the rubber material 3 while using the machine 1.

In the machine 1 according to some embodiments described above, when the oil product 45 is supplied through the communication portion 27, the machine 1 is operated so as to change a region of the rubber material 3 facing the second end of the communication portion 27.

More specifically, for example, in the embodiment shown in FIG. 16, the machine tool 1B is operated so that the cover segments 31A, 31B, 31C of the telescopic cover 30 move relative to each other in the expansion and contraction direction while the oil product 45 is supplied by the supply unit 5. Thus, since a relative position between the second end of the communication portion 27, i.e., the outlet-side end of the supply pipe 85, and the wiper 36 changes, the region of the rubber material 3 facing the second end of the communication portion 27 changes.

For example, in the embodiment shown in FIG. 18, the machine 1E is operated so that the rubber rollers 8 in contact with each other rotate while the oil product 45 is supplied to the rubber rollers 8 by the supply unit 5B. Thus, since the outer peripheral surface of the rubber rollers 8 moves relative to the second end of the communication portion 27, i.e., the outlet-side end of the supply pipe 85, the region of the rubber material 3 facing the second end of the communication portion 27 changes.

Consequently, since the oil product 45 containing the softener can be supplied to a wide region of the rubber material 3, it is possible to reduce the hardness of the rubber material 3 or to suppress the curing of the rubber material 3 in a wide region of the rubber material 3.

In the above embodiment, as shown in FIG. 18, the machine 1E includes the rubber rollers 8 in contact with each other. In the machine 1E shown in FIG. 18, the oil product 45 is supplied to the contact portion of the rubber rollers from the second end of the communication portion 27.

Thus, it is possible to reduce the hardness of the rubber material 3 or to suppress the curing of the rubber material 3 in a wide region of the rubber rollers 8 in contact with each other.

In the machine 1 according to some embodiments described above, the communication portion 27 may be formed prior to supplying the oil product 45 through the communication portion 27, and the first end thereof may be covered after completion of supply of the oil product 45.

More specifically, for example, in the embodiment shown in FIG. 14 where the gap in the connection portion between the female thread 24a of the union nut 24 and the male thread 23a of the union screw 23 is the communication portion 27A, the communication portion 27A is formed prior to supplying the oil product 45 through the communication portion 27A. Then, as described above, in the embodiment shown in FIG. 14, after the oil product 45 containing the softener is supplied, the first end of the communication portion 27A, i.e., the end 28, may be covered.

For example, in the embodiment shown in FIG. 15, the communication portion 27B is formed prior to supplying the oil product 45 through the communication portion 27B. Then, as described above, in the embodiment shown in FIG. 15, after the oil product 45 containing the softener is supplied, the first end of the communication portion 27B, i.e., the end 28, may be covered.

Thus, according to some embodiments, since the communication portion 27 is formed prior to supplying the oil product 45 containing the softener, the oil product 45 containing the softener can be supplied to the rubber material 3 through the communication portion 27. Further, according to some embodiments, since the first end of the communication portion 27 is covered after completion of supply of the oil product 45 containing the softener, as described above, it is possible to prevent the oil product 45 containing the softener from flowing out from the end. Thus, it is possible to suppress an unintended reduction in contact time between the softener and the rubber material 3 due to outflow of the oil product 45 containing the softener from the end.

In some embodiments, the first end of the communication portion 27 is connected to the supply device (supply unit 5) storing the oil product 45 via a channel.

For example, in the embodiment shown in FIG. 15, the first end of the communication portion 27, i.e., the end 29, is connected to the tank 75 of the supply unit 5 storing the oil product 45 via the pipe 77 which is the channel.

Thereby, it is possible to stably introduce the oil product containing the softener to the rubber material.

The oil product 45 according to some embodiments is supplied to the rubber material 3 for lubrication, cooling, power transmission, or sealing in the machine 1 as described above.

Thus, it is possible to suppress the curing of the rubber material 3 used for lubrication, cooling, power transmission, or sealing in the machine 1 as described above.

In some embodiments, the oil product 45 according to some embodiments is grease containing the base oil and the softener.

Thus, in the machine 1 using grease, it is possible to reduce the hardness of the rubber material 3 or to suppress the curing of the rubber material 3.

The oil product 45 according to some embodiments is any of fuel, lubricant oil, a cutting oil agent, refrigeration oil used in a chiller, a pressure transmitting medium, or a heat transfer medium containing the base oil and the softener.

Thus, in the machine 1 using any of fuel, lubricant oil, a cutting oil agent, refrigeration oil used in a chiller, a pressure transmitting medium, or a heat transfer medium, it is possible to reduce the hardness of the rubber material 3 or to suppress the curing of the rubber material 3.

### (Rubber material recovery method)

As described in the above embodiments, by supplying the rubber material with the oil product 45 containing the softener having a SP value the absolute difference of which from the SP value of the rubber material 3 is 1.7 or less, it is possible to effectively reduce the hardness of the rubber material 3 or to effectively suppress the curing of the rubber material 3.

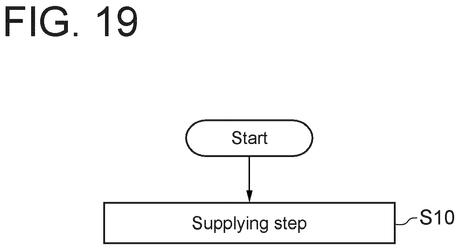

More specifically, as shown in FIG. 19, the method for recovering the rubber material 3 according to some embodiments includes a supplying step S10 of supplying the rubber material 3 with the oil product 45 containing the softener having a SP value the absolute difference of which from the SP value of the rubber material 3 is 1.7 or less.

FIG. 19 is a flowchart showing the process of the method for recovering the rubber material 3 according to some embodiments.

In the recovery method for the rubber material 3 according to some embodiments, in the supplying step S10 shown in FIG. 19, according to the material of the rubber material 3, use of the rubber material 3, or type of the machine 1 using the rubber material 3, the oil product 45 containing the softener is supplied to the rubber material 3 in accordance with various embodiments described above.

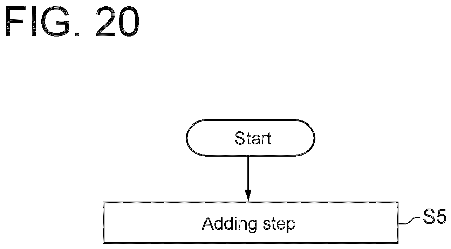

For example, in the case of reducing the hardness of the wiper 36 in the machine tool 1B shown in FIG. 16, as shown in FIG. 20, the rubber material recovery method includes an adding step S5 of adding the softener for reducing the hardness of the rubber material 3 to the oil product 45 used for lubrication, cooling, power transmission, or sealing of the machine including the rubber material 3.

In this case, the softener is added to the cutting oil by supplying the softener to the tank 83 in FIG. 16 so as to meet a SP value and a concentration in the range 111 in FIG. 13, the range 122 in FIG. 11, or the range 132 in FIG. 12. Then, in the supplying step S10 shown in FIG. 19, the cutting oil containing the softener is supplied to the wiper 36.

FIG. 20 is a flowchart showing the process of the method for recovering the rubber material 3 according to some embodiments.

Thus, it is possible to reduce the hardness of the rubber material or to suppress the curing of the rubber material while using the machine.

The present invention is not limited to the embodiments described above, but includes modifications to the embodiments described above, and embodiments composed of combinations of those embodiments.

The softeners exemplified in the above description is merely examples of the softener to which the present invention is applicable and do not exclude any other softener.

## Claims

1. A machine comprising a rubber material to be supplied with an oil product containing a softener, wherein an absolute difference between a solubility parameter of the softener and a solubility parameter of the rubber material is 1.7 or less,
the machine having a communication portion connecting the rubber material and an outside of the machine,
the machine being configured to supply the oil product from a first end of the communication portion to a second end of the communication portion.

2. The machine according to claim 1,
wherein the machine is configured to operate so as to change a region of the rubber material facing the second end of the communication portion while the oil product is supplied through the communication portion.

3. The machine according to claim 2, comprising a plurality of rubber rollers in contact with each other,
wherein the oil product is supplied to a contact portion between the rubber rollers from the second end of the communication portion.

4. The machine according to any one of claims 1 to 3,
wherein the communication portion is formed prior to supplying the oil product through the communication portion, and the first end of the communication portion is covered after completion of supply of the oil product.

5. The machine according to any one of claims 1 to 4,
wherein the first end of the communication portion is connected to a supply device storing the oil product via a channel, and
wherein the oil product is introduced to the rubber material via the channel and the communication portion.

6. A machine comprising a rubber material,
the machine having a filled portion filled with an oil product containing a softener so that the oil product is in contact with the rubber material, wherein an absolute difference between a solubility parameter of the softener and a solubility parameter of the rubber material is 1.7 or less.

7. An oil product to be supplied to a rubber material used for lubrication, cooling, power transmission, or sealing of the machine according to any one of claims 1 to 5.

8. The oil product according to claim 7,
wherein the oil product is grease containing a base oil and the softener.

9. The oil product according to claim 7,
wherein the oil product is any of fuel, lubricant oil, a cutting oil agent, refrigeration oil used in a chiller, a pressure transmitting medium, or a heat transfer medium containing a base oil and the softener.
